# EUROPEAN PATENT SPECIFICATION

(11) **EP 0 757 006 B1**
(45) Date of publication and mention of the grant of the patent: **22.12.1999**
(21) Application number: 96202180.4
(22) Date of filing: 02.08.1996
(51) Int. Cl.: B65D 75/58, B65B 3/02

(54) **Piping bag containing a bakery product and method for manufacturing such piping bag**
Mit einem Bäckereiprodukt gefüllter Spritzbeutel und Verfahren zu seiner Herstellung
Poche à douille remplie avec un produit de patisserie et méthode pour sa fabrication

(30) Priority: 03.08.1995 NL 1000926
(43) Date of publication of application: 05.02.1997
(73) Proprietor: Verenigde Coöperatieve Melkindustrie Coberco B.A., NL-7201 NM Zutphen (NL)
(72) Inventor: Ooms, Guido, 3290 Schaffen-Diest (BE)
(74) Representative: Smulders, Theodorus A.H.J., Ir.

(56) References cited:
- EP-A- 0 340 132
- EP-A- 0 661 208
- DE-A- 3 016 266
- DE-B- 1 146 438
- GB-A- 1 130 978
- US-A- 1 907 254

## Description

This invention relates to a piping bag according to the preamble of claim 1.

Such a piping bag is known from European patent application EP-A-340132. This publication describes a piping bag for viscous products, such as, for instance, mayonnaise, cream, sauce, etc. The piping bag is formed from a plastic film material which contains the product and is closed by means of a sealed joint in order to enable prolonged preservation of the stored product. The piping bag further possesses an angular tip which is removable by cutting or tearing for the purpose of forming a spray opening. Located in the proximity of the angular tip is a cone-shaped insert which comprises a passage and moreover forms a spray nozzle for the purpose of providing the product with a particular fancy contour as it is being dispensed. The insert disposed in the piping bag can be held in position through a fastening means located on the outside of the piping bag or through a connecting weld, whereby further the space between the insert and the piping bag is sealed. Furthermore, in column 5, lines 6 through 14, mention is made of the possibility of closing the opened piping bag through a suitable closing means which can be applied to the insert.

Although the known container possesses the favorable property that it has the function of both package and dosing device, the quality of this dosing device is very limited. In fact, with the known container only one spray ribbon can be produced and there is no possibility of providing spray ribbons with different fancy contours. Another disadvantage of the known piping bag is that after the angular tip has been cut off for forming the spray opening, the piping bag is difficult to close. Moreover, it is possible that the spray opening is not entirely cleared after the angular tip has been cut off. As a result, there is a chance of the fancy contour being disturbed. Yet another disadvantage is that the spray nozzle is discarded together with the empty piping bag, and is not suitable for re-use.

The object of the invention is to provide a piping bag of the type described in the preamble, that is, a piping bag which serves both as a package for the purpose of storage in the freezer, refrigerator or even on the uncooled shelf of a retailer, and as a dosing device, but which does not suffer from the above-described disadvantages.

To that end, according to the invention, the piping bag is characterized by the features of claim 1.

Owing to the feature that in the interior of the container, adjacent the removable angular tip, an insert has been arranged which comprises provisions for the purpose of attaching a spray nozzle or closure cap, it is possible, after removal of the angular tip, to attach to the insert a spray nozzle as desired. Depending on the choice of the spray nozzle, a spray ribbon with a particular fancy contour can be formed. When the activities with the piping bag have been ended and a bakery product is still present in the piping bag, the spray nozzle can be detached from the insert and a closure cap can be attached to the insert. The accomplishment thus achieved is that the bakery product disposed in the piping bag is closed off from the environment, so that storage of the piping bag in a refrigerator is possible in a simple manner without the bakery product thereby being further contaminated bacterially.

The invention further relates to a method according to the preamble of claim 6.

This method is also partially known from the previously mentioned European patent application EP-A-340132. For the purpose of manufacturing the piping bag according to the invention in a simple manner, whereby a long storage life of the product to be stored can be obtained, the above-mentioned method has the additional features of claim 6. It should be noted that DE-A-3016266 discloses a method for forming and filling a sterile container of a plastic foil. However, the document does not relate to piping bags or containers comprising an insert.

Further elaborations of the piping bag and the method according to the invention are described in the subclaims and will be further clarified on the basis of two exemplary embodiments, with reference to the drawing.
Fig. 1 shows a side elevation of the angular tip area of a first piping bag according to the invention;
Fig. 2 shows a second side elevation of the angular tip area represented in Fig. 1;
Fig. 3 shows a bottom view of the insert represented in Fig. 1;
Fig. 4 shows a spray nozzle which is suitable to be fitted on the insert represented in Figs. 1-3;
Fig. 5 shows a top plan view of the exemplary embodiment of a spray nozzle as represented in Fig. 4;
Fig. 6 shows the tip area of a second exemplary embodiment of a piping bag according to the invention;
Fig. 7 shows a closure cap which is suitable to be fitted on the insert represented in Fig. 6; and
Fig. 8 shows a side elevation of an exemplary embodiment of the piping bag as a whole.

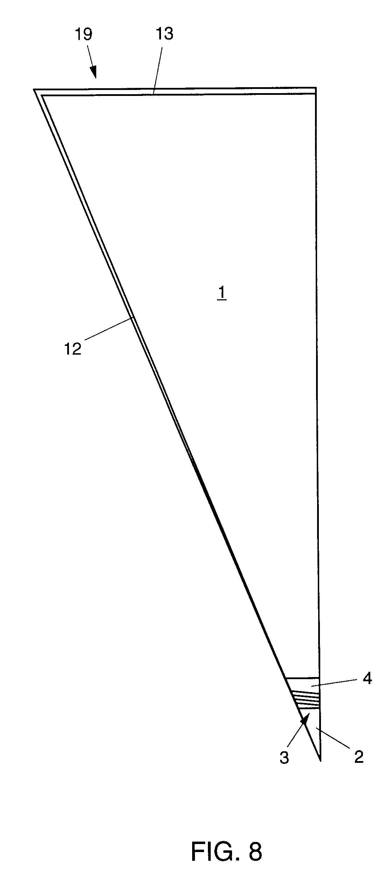

The exemplary embodiments shown in the figures all relate to a piping bag which contains a bakery product, such as, for instance, whipped cream, pastry cream or a similar pasty substance. The piping bag comprises a bag-shaped flexible holder 1 consisting of plastic film material 11, which container 1 contains the ready bakery product and is closed through a sealed or glued joint 12, 13, represented in Fig. 8, and is suitable for prolonged storage in a refrigerator, freezer or on the uncooled shelf of the retailer. The container 1 comprises an angular tip 2 which is removable along a line 17 through cutting or tearing, so as to form a spray opening 3. Optionally, the line 17 can be marked by a printing indicating where the angular tip 2 is to be cut off or the plastic film 11 can be weakened adjacent the line 17 in some way or another, thereby facilitating tearing off the angular tip 2.

According to the invention, an insert 4 which comprises a passage 18 is arranged adjacent the removable angular tip 2 in the interior of the container 1. At least through a part of the height of its surface, the insert 4 is in sealing abutment with the plastic film 11 of the flexible container 1. Further, the insert 4 is fitted with provisions 5 or 9 for the purpose of attaching a spray nozzle 6 or closure cap 14.

Owing to the feature that the insert 4, through a part of its height, has its external surface in sealing abutment with the plastic film 11 of the flexible container 1, the accomplishment achieved is that the bakery product disposed in the container 1 egresses exclusively through the passage 18 and not between the external surface of the insert 4 and the plastic film 11. The resultant achievement is that the bakery product can be dosed in an accurate manner.

In order to prevent the insert 4 from becoming detached from the angular tip during the storage of the piping bag and starting to float through the bakery product in the container 1, the insert 4 is preferably connected to the film material 11 of the container 1 through a sealed joint 7, such as, for instance, a spot weld.

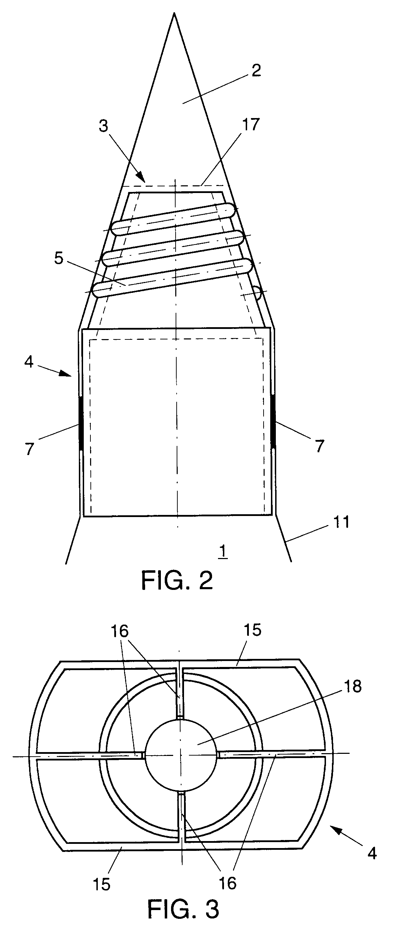

As is clearly represented in Fig. 3, the insert 4 is preferably provided with two flattened sides 15 extending parallel to each other and which facilitate the effectuation of the sealed joint 7 between the insert 4 and the film material 11. Provided in the interior of the insert 4 are ribs 16 which prevent the inserts 4 from getting stuck one within the other during the processing thereof. Due to the presence of these ribs 16, the processing of the inserts is simpler.

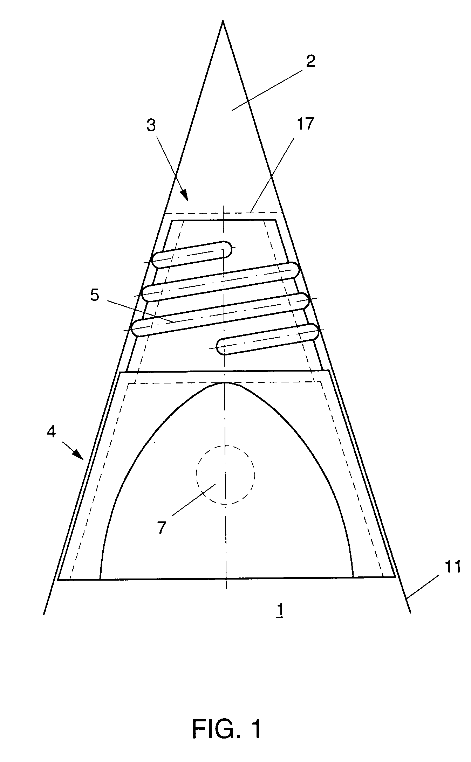

Figs. 1-3 show the angular tip area of a first exemplary embodiment of the piping bag according to the invention. In this embodiment, the provisions for the purpose of attaching a spray nozzle 6 or closure cap are designed as a screw thread 5.

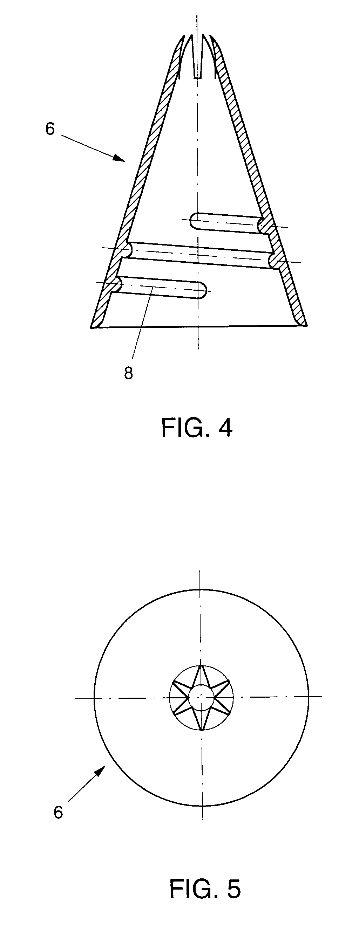

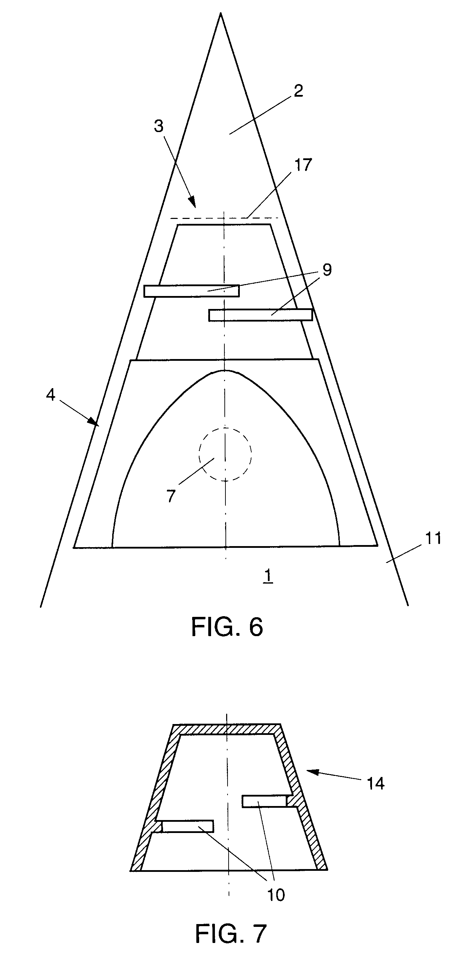

Figs. 5 and 6 show an example of a spray nozzle 6 provided with screw thread 8 suitable for engagement with the screw thread 5 of the insert 4 represented in Figs. 1-3.

Figs. 6 and 7 show the tip area of a second embodiment of a piping bag according to the invention and a closure cap 14 suitable for cooperation with the insert 4 represented in Fig. 6. In the present exemplary embodiment, the provisions for the purpose of attaching a spray nozzle or closure cap 14 are designed as one bayonet half 9 of a bayonet catch 9, 10 of which the other bayonet half 10 is arranged on the closure cap 14 represented in Fig. 7. It is clear that spray nozzles 6 as represented in Figs. 4 and 5, rather than being provided with screw thread, can also be provided with a bayonet half 10 for cooperation with the insert 4 represented in Fig. 6.

A suitable material for manufacturing the insert 4, the closure cap 14, and the various spray nozzles 6 is polyethylene or polypropylene.

For manufacturing a piping bag according to the invention, a bag-shaped flexible container 1 is formed from a plastic film 11 through a cutting and sealing operation. Preferably, before the cutting and sealing operations are commenced, the plastic film 11, which mostly comes from a continuous web, is sterilized in a continuous manner. In the exemplary embodiment represented in Fig. 8, the container consists of a folded-double triangular film portion which has the shape of a cornet. After the triangular film has been folded double, a first seal 12 is provided, which joins together the two free edges of the triangular film sheet, which edges start from the angular tip 2. Then, in accordance with the invention, an insert 4 is placed in the container 1 adjacent the removable angular tip 2. Optionally, after being fitted, the insert 4 is joined to the plastic film 11 through a sealing operation. Then the container 1 is filled with a bakery product, such as, for instance, whipped cream, pastry cream or a like pasty substance, via the filling orifice 19 which is formed by the free edge of the triangular film sheet remote from the angular tip 2. After the container 1 has been filled with the bakery product, the filling orifice 19 is closed by means of a seal or weld 13 through a sealing operation.

Preferably, all of the above-described operations occur under aseptic conditions. This can be accomplished in that the cutting and sealing operation for forming the container 1, placing the insert 4, filling the container 1 with the bakery product and closing the filling orifice 19 through a sealing or welding operation occur under a sterile screen of a laminar gas stream which is under excess pressure, such as, for instance, a sterile laminar air stream.

One possibility of creating a pasteurized environment in the piping bag is to fill the piping bag with a bakery product or like pasty product which has a temperature of about 80-95°C. As the container 1 is being filled, the film material 11 is thereby pasteurized, while the product itself is already pasteurized owing to the high temperature thereof. A piping bag thus filled up can be stored for a long period of time.

The thus-manufactured piping bag filled with bakery product is suitable as a package for storage in the refrigerator of the retailer When the bakery product is sterile, even storage on the uncooled shelf of the retailer is possible. In any case, storage can cover a period of time much longer than the period of four weeks possible heretofore. When the user desires to use the piping bag as a dosing device for the first time, he only needs to remove the angular tip 2 by cutting or tearing it off, after which a spray nozzle 6 can be placed on the insert 4 and bakery product can be metered by increasing the pressure in the container 1 by squeezing it. Upon completion of the dosing activities, the piping bag, if it still contains product, can be closed with the closure cap 14 and it is thus suitable for temporary storage in a refrigerator.

It is clear that the invention is not limited to the exemplary embodiment described, but that various modifications are possible within the framework of the invention. Thus, other pasty foods can be stored in the piping bag, such as, for instance, pâté.

## Claims

1. A piping bag containing a bakery product, such as, for instance, whipped cream, pastry cream or a like pasty substance, comprising a bag-shaped flexible container consisting of plastic film material, which container contains the ready bakery product and is closed through a sealed or glued joint and is suitable for prolonged storage in a refrigerator or freezer, the container comprising an angular tip which is removable through cutting or tearing for forming a spray opening, the piping bag further comprising a spray nozzle (6), and an insert (4) with a passage (18), which insert is placed adjacent the removable angular tip (2) in the interior of the container, which insert (4), at least through a part of the height of the external surface thereof, is in sealing abutment with the plastic film (11) of the flexible container (1), characterized in that the insert (4), on the external circumference thereof, comprises attaching provisions (5, 9) for detachably attaching the separate spray nozzle (6) after the removal of said angular tip.

2. A piping bag according to claim 1, characterized in that the insert (4) is connected to the film material (11) of the container (1) through a sealed joint (7), such as, for instance, a spot weld.

3. A piping bag according to claim 1, characterized in that the provisions for the purpose of attaching the spray nozzle (6) are designed as screw thread (5), while the respective spray nozzles (6) are provided with screw threads (8) suitable for engagement with the screw thread (5) of the insert (4).

4. A piping bag according to claim 1, characterized in that the provisions (5, 9) for the purpose of attaching the spray nozzle (6) are constructed as a bayonet half (9) of a bayonet catch (9, 10) of which the other bayonet half (10) is arranged on the respective spray nozzles (6).

5. A piping bag according to any one of the preceding claims, characterized in that the insert (4) is manufactured from polyethylene or polypropylene.

6. A method for manufacturing a piping bag according to any one of claims 1-5, wherein a bag-shaped flexible container is formed from a plastic film through a cutting and sealing operation, said container comprising a filling orifice, a spray nozzle (6) and an angular tip which is removable through cutting or tearing for forming a spray opening, which container is filled with a bakery product, such as, for instance, whipped cream, pastry cream or a like pasty substance, wherein thereafter the filling orifice is closed through a sealing operation, wherein before the container is filled with the bakery product, an insert is placed in the container adjacent the removable angular tip, wherein the plastic film (11) originates from a continuous plastic film web which, before the cutting and sealing operation for forming the container (1) is commenced, is sterilized in a continuous manner, the method being carried out entirely under aseptic conditions, and the cutting and sealing operation for forming the container (1), placing the insert (4), filling the container (1) with the bakery product and closing the filling orifice (19) through a sealing operation occuring under a sterile screen of a laminar gas stream which is under excess pressure, and wherein the insert (4) comprises attaching provisions (5,g) for detachably attaching the separate spray nozzle (6) after the removal of said angular tip.

7. A method according to claims 6, characterized in that the container (1) is filled with a bakery product or like pasty substance which has a temperature of about 80-95°C.

## Patentansprüche

1. Spritzbeutel mit einem darin enthaltenen Bäckereiprodukt wie z.B. Schlagsahne, Backwaren-Creme oder einer ähnlichen cremigen Substanz, mit einem beutelförmigen flexiblen Behälter aus einem Plastikfolienmaterial, der das fertige Bäckereiprodukt enthält, mittels einer Siegelungs- oder Klebverbindung geschlossen ist und zur längeren Lagerung in einem Eisschrank oder einer Gefrierkammer geeignet ist, wobei der Behälter eine winkelförmige Spitze aufweist, die zwecks Bildung einer Spritzöffnung durch Schneiden oder Reißen entfernbar ist, wobei der Spritzbeutel ferner eine Spritzdüse (6) und einen Einsatz (4) mit einem Durchlaß (18) aufweist, welcher der entfernbaren winkelförmigen Spitze (2) benachbart im Inneren des Behälters angeordnet ist, wobei sich der Einsatz (4) mindestens über einen Teil der Höhe seiner Außenfläche in dichtender Anlage an der Plastikfolie (11) des flexiblen Behälters (1) befindet, dadurch gekennzeichnet, daß der Einsatz (4) an seinem Außenumfang Befestigungsmöglichkeiten (5,9) aufweist, um nach dem Entfernen der winkelförmigen Spitze die separate Spritzdüse (6) abnehmbar zu befestigen.

2. Spritzbeutel nach Anspruch 1, dadurch gekennzeichnet, daß der Einsatz (4) durch eine Siegelungsverbindung (7), wie z.B. eine Punktschweißung, mit dem Folienmaterial (11) des Behälters (1) verbunden ist.

3. Spritzbeutel nach Anspruch 1, dadurch gekennzeichnet, daß die Befestigungsmöglichkeiten der Spritzdüse (6) als ein Schraubgewinde (5) ausgebildet sind, während die jeweiligen Spritzdüsen (6) mit Schraubgewinden (8) versehen sind, die zum Zusammengriff mit dem Schraubgewinde (5) des Einsatzes (4) geeignet sind.

4. Spritzbeutel nach Anspruch 1, dadurch gekennzeichnet, daß die Befestigungsmöglichkeiten (5,9) der Spritzdüse (6) als eine Bajonett-Hälfte (9) eines Bajonettverschlusses (9,10) ausgebildet sind, dessen andere Bajonetthälfte (10) an den jeweiligen Spritzdüsen (6) angeordnet ist.

5. Spritzbeutel nach einem der vorherigen Ansprüche, dadurch gekennzeichnet, daß der Einsatz (4) aus Polyethylen oder Polypropylen gebildet ist.

6. Verfahren zum Herstellen eines Spritzbeutels nach einem der Ansprüche 1-5, bei dem ein beutelförmiger flexibler Behälter durch eine Schneid- und Siegelungsoperation aus einer Plastikfolie gebildet wird, wobei der Behälter eine Füllöffnung, eine Sprühdüse (6) und eine winkelförmige Spitze aufweist, die zwecks Bildung einer Spritzöffnung durch Schneiden oder Reißen entfernbar ist, wobei der Behälter mit einem Bäckereiprodukt wie z.B. Schlagsahne, Backwaren-Creme oder einer ähnlichen cremigen Substanz gefüllt wird, wobei anschließend die Füllöffnung durch eine Siegelungsoperation geschlossen wird, wobei, bevor der Behälter mit dem Bäckereiprodukt gefüllt wird, ein Einsatz in dem Behälter nahe der entfernbaren winkelförmigen Spitze plaziert wird, wobei die Plastikfolie (11) einer fortlaufenden Plastikfolienbahn entnommen wird, die vor dem Beginn der Schneid- und Siegelungsoperation zum Bilden des Behälters (1) fortlaufend sterilisiert wird, wobei das Verfahren vollständig unter aspeptischen Bedingungen durchgeführt wird, und die Schneid- und Siegelungsoperation zum Bilden des Behälters (1), das Plazieren des Einsatzes (4), das Befüllen des Behälters (1) mit dem Bäckereiprodukt und das durch eine Siegelungsoperation vorgenommene Schließen der Füllöffnung (19) unter einem sterilen Vorhang eines unter Überdruck stehenden Laminargasstroms erfolgen, und wobei der Einsatz (4) Befestigungsmöglichkeiten (5,9) aufweist, um nach dem Entfernen der winkelförmigen Spitze die separate Spritzdüse (6) abnehmbar zu befestigen.

7. Verfahren nach Anspruch 6, dadurch gekennzeichnet, daß der Behälter (1) mit einem Bäckereiprodukt oder einer ähnlichen cremigen Substanz gefüllt wird, die eine Temperatur von ungefähr 80-95° hat.

## Revendications

1. Sac du canalisation contenant un produit de boulangerie, tel que de la crème fouettée, de la crème pâtissière ou une substance pâteuse analogue, comprenant un récipient souple en forme de sac constitué d'un matériau à base d'un film de matière plastique, le récipient contenant le produit de boulangerie préparé, étant fermé par un joint soudé ou collé et convenant à un stockage prolongé au réfrigérateur ou au congélateur, le récipient comprenant un bout angulaire amovible par découpe ou déchirure pour la formation d'une ouverture de pulvérisation, le sac de canalisation comprenant en outre une buse de pulvérisation (6), et un élément rapporté (4) ayant un passage (18) et qui est adjacent au bout angulaire amovible (2) à l'intérieur du récipient, cet élément rapporté (4), au moins sur une partie de la hauteur de sa surface externe, étant en butée de manière étanche avec le film de matière plastique (11) du récipient souple (1), caractérisé en ce que l'élément rapporté (4), à sa circonférence externe, comporte des organes de fixation (5, 9) destinés à fixer de façon amovible la buse séparée de pulvérisation (6) après enlèvement du bout angulaire.

2. Sac de canalisation selon la revendication 1, caractérisé en ce que l'élément rapporté (4) est raccordé au matériau du film (11) du récipient (1) par un joint soudé (7), par exemple par soudage par points.

3. Sac de canalisation selon la revendication 1, caractérisé en ce que les organes de fixation de la buse de pulvérisation (6) sont sous forme d'un filetage (5) alors que les buses respectives de pulvérisation (6) comportent des filets (8) qui peuvent coopérer avec le filetage (5) de l'élément rapporté (4).

4. Sac de canalisation selon la revendication 1, caractérisé en ce que les organes (5, 9) destinés à fixer la buse de pulvérisation (6) sont sous forme d'une moitié (9) d'un organe de fixation (9, 10) à baïonnette dont l'autre moitié (10) est placée sur les buses respectives du pulvérisation (6).

5. Sac de canalisation salon l'une quelconque des revendications précédentes, caractérisé en ce que l'élément rapporté (4) ont formé de polyéthylène ou de polypropylène.

6. Procédé de fabrication d'un sac de canalisation selon l'une quelconque des revendications 1 à 5, dans lequel un récipient souple en forme de sac est réalisé en un film de matière plastique par une opération de découpe et de soudage, le récipient comprenant un orifice de remplissage, une buse de pulvérisation (6)et un bout angulaire amovible par découpe ou déchirure afin qu'il forme une ouverture de pulvérisation, le récipient étant rempli d'un produit de boulangerie, tel que de la crème fouettée, de la crème pâtissière ou une substance pâteuse analogue, dans lequel l'orifice de remplissage est ensuite fermé par une opération de scellement, dans lequel, avant que le récipient ne soit rempli du produit de boulangerie, un élément rapporté est placé dans le récipient près du bout angulaire amovible, dans lequel le film de matière plastique (11) provient d'une nappe continue d'un film de matière plastique qui, avant l'opération de découpe et de scellement destinée à former le récipient (1), est stérilisée de manière continue, le procédé étant réalisé dans des conditions totalement aseptiques, et l'opération de coupe et de scellement destinée à former le récipient (1), la disposition de l'élément rapporté (4), le remplissage du récipient (1) du produit de boulangerie et la fermeture de l'orifice de remplissage (19) par une opération de scellement se produisant sous un écran stérile d'un courant gazeux laminaire en surpression, et dans lequel l'élément rapporté (4) comprend des organes de fixation (5, 9) destinés à fixer de façon amovible la buse séparée de pulvérisation (6) après enlèvement du bout angulaire.

7. Procédé selon la revendication 6, caractérisé en ce que le récipient (1) est rempli d'un produit de boulangerie ou d'une substance pâteuse analogue qui a une température d'environ 80 à 95 °C.
